# EUROPÄISCHE PATENTANMELDUNG

(11) **EP 0 785 374 A1**
(43) Veröffentlichungstag der Anmeldung: **23.07.1997**
(21) Anmeldenummer: 97810015.4
(22) Anmeldetag: 14.01.1997
(51) Int. Cl.: F16G 11/00, A01G 17/06

(54) **Führungs-bzw. Befestigungsvorrichtung für Seilabschnitte**

(30) Priorität: 16.01.1996 CH 112/96
(71) Anmelder: Jakob AG, CH-3555 Trubschachen (CH)
(72) Erfinder: Lehmann, Rudolf, 4500 Solothurn (CH)
(74) Vertreter: Hug Interlizenz AG

(57) **Zusammenfassung**

Bei einer Vorrichtung (23) für die Führung bzw. Befestigung einer Mehrzahl von in verschiedene Raumrichtungen abgehenden Seilabschnitten (28, 29) an einem Haltepunkt, insbesondere an einem aus einer Wand herausragenden, in der Wand befestigten Wandhalter zum Aufbau von Rankhilfen an Gebäuden, wird ein einfacher Aufbau bei flexiblem Einsatz und gleichzeitig ästhetischem Aussehen dadurch erreicht, dass die Vorrichtung (23) erste Mittel (26, 27) zum Befestigen der Vorrichtung an dem Haltepunkt und zweite Mittel (24, 25) zum gemeinsamen Führen bzw. Befestigen der Mehrzahl der Seilabschnitte (28, 29) umfasst, welche zweiten Mittel (24, 25) mit den ersten Mitteln (26, 27) mechanisch verbunden sind.

## Beschreibung

### TECHNISCHES GEBIET

Die vorliegende Erfindung bezieht sich auf das Gebiet des Hochbaus. Sie betrifft eine Vorrichtung für die Führung bzw. Befestigung einer Mehrzahl von in verschiedene Raumrichtungen abgehenden Seilabschnitten an einem Haltepunkt, insbesondere an einem aus einer Wand herausragenden, in der Wand befestigten Wandhalter zum Aufbau von Rankhilfen an Gebäuden.

### STAND DER TECHNIK

In der Architektur kommen aus ästhetischen und praktischen Gründen zunehmend rostfreie Stahlseile zum Einsatz, beispielsweise zum Aufbau und zur Sicherung von Geländern, zum Abspannen von Konstruktionselementen, oder als Rankhilfen zur Begrünung von Gebäudefassaden. Beim Aufbau von Rankhilfen werden parallel oder auch in verschiedenen Winkeln zur Wand Seilabschnitte gespannt, an denen die zur Begrünung eingesetzten Pflanzen entlangranken können. Die auf den Seilabschnitten lastenden Zugkräfte, die u.a. durch das Gewicht der Pflanzen, Schnee oder Winddruck erzeugt werden, müssen an bestimmten Punkten durch geeignete Wandhalter aufgefangen werden, um eine ausreichende mechanische Langzeitstabilität auch unter schwierigen Bedingungen zu gewährleisten.

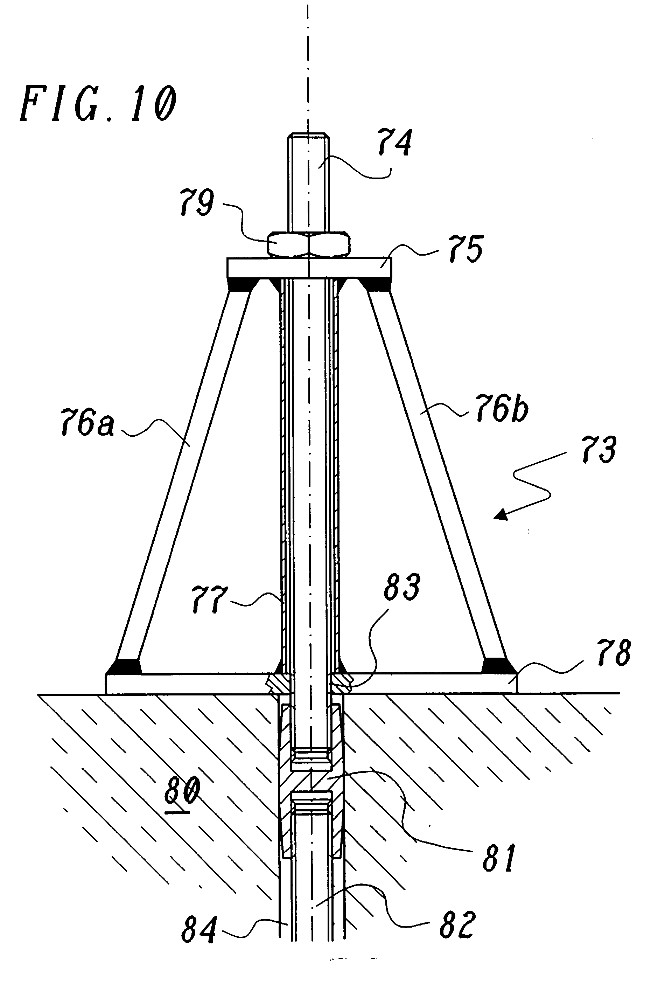

Ein geeigneter Wandhalter, der in dieser Form vom gleichen Anmelder in der früheren, nicht vorveröffentlichten Europäischen Patentanmeldung Nr. 95810350.9 vom 24.05.1995 angemeldet und beschrieben worden ist, ist in der Fig. 10 dargestellt. Fig. 10 zeigt in der Seitenansicht, d.h. parallel zur Wandfläche, und teilweise geschnitten einen sehr einfach aufgebauten Wandhalter 73 mit einem Haltebolzen 74, einer Stützplatte 75 und einer Grundplatte 78. Als Abstützelemente sind (drei um 120° versetzte) Abstützstangen 76a,b aus Vollmaterial ausgebildet. Die Abstützstangen 76a,b sind endseitig mit der Stützplatte 75 bzw. der Grundplatte 78 verschweisst. Der Haltebolzen 74, der in diesem Fall eine Gewindestange ist, ist zwischen den Platten 75 und 78 von einem Abdeckrohr 77 umgeben, welches endseitig ebenfalls mit den Platten 75 bzw. 78 verschweisst ist. Im Zentrum der Grundplatte 78 ist vorzugsweise eine Gewindebohrung 83 vorgesehen, die dem Gewinde des Haltebolzens 74 angepasst ist, und in welche der Haltebolzen 74 eingeschraubt wird. Zur Konterung des Haltebolzens 74 kann auf der Oberseite der Stützplatte 75 eine Mutter 79 eingesetzt werden. Der Wandhalter 73 ist in einer Wand 80 verankert.

Der Wandhalter, der vorzugsweise vollständig aus Metall besteht, muss relativ tief in der Wand verankert werden. Die Gewindestange des Haltebolzens 74 aus Fig. 10 würde, wenn sie tief in die Wand 80 hineinreicht oder sogar durch die Wand 80 hindurchgeht, eine unerwünschte Kältebrücke darstellen, welche lokal die thermische Isolation der Wand aufhebt. Da beim Einsatz als Begrünungshilfe viele Wandhalter in der Wand verankert werden müssen, würden viele Kältebrücken vorhanden sein, die einen merklichen Einfluss auf die Gebäudeisolation hätten. Um solche Kältebrücken nicht entstehen zu lassen, wird daher vorzugsweise der über die Grundplatte 78 hinausragende, in die Bohrung 84 in der Wand hineinreichende Gewindeabschnitt des Haltebolzens 74 nur relativ kurz gewählt. Verlängert wird der Haltebolzen 74 in der Wand 80 durch eine weitere Gewindestange 82, die an den Haltebolzen 74 über ein thermisch isolierendes Zwischenstück 81 (z.B. aus einem Kunststoff) anschliesst. Das Zwischenstück 81 kann dazu auf beiden Seiten mit einem Gewinde versehen sein, in welches der Haltebolzen 74 bzw. die Gewindestange 82 eingeschraubt ist.

Der Teil des Haltebolzens (der Gewindestange) 74 oberhalb der Stützplatte 75 dient als Halte- bzw. Verankerungspunkt für verschiedene (in Fig. 10 nicht dargestellte) Seilabschnitte, die vom Haltepunkt aus in verschiedene Raumrichtungen - parallel zur Wand 80 oder auch in einem von 0° verschiedenen Winkel dazu - abgehen und am Haltepunkt befestigt, umgelenkt oder geführt werden müssen. Hierzu sind Befestigungsvorrichtungen notwendig, die nicht nur einfach aufgebaut und flexibel in der Anwendung sein müssen, sondern auch hohe Sicherheitsanforderungen erfüllen und zugleich ästhetisch ansprechend gestaltet sind.

### DARSTELLUNG DER ERFINDUNG

Es ist Aufgabe der Erfindung, Befestigungsvorrichtungen zu schaffen, die den genannten Anforderungen genügen.

Die Aufgabe wird bei einer Vorrichtung der eingangs genannten Art dadurch gelöst, dass die Vorrichtung erste Mittel zum Befestigen der Vorrichtung an dem Haltepunkt und zweite Mittel zum gemeinsamen Führen bzw. Befestigen der Mehrzahl der Seilabschnitte umfasst, welche zweiten Mittel mit den ersten Mitteln mechanisch verbunden sind. Der Kern der Erfindung besteht darin, mit Hilfe der zweiten Mittel die verschiedenen Seilabschnitte zunächst zusammenzuführen und zu verankern, und dann die zweiten Mittel zentral mit Hilfe der ersten Mittel am Haltepunkt zu befestigen. Gegenüber der einzelnen Verankerung der Seilabschnitte am Haltepunkt wird dadurch eine Vereinfachung im Aufbau des Seilsystems sowie eine erhöhte Flexibilität in der Anwendung erreicht.

Eine erste bevorzugte Ausführungsform der Erfindung zeichnet sich dadurch aus, dass die ersten Mittel ein geschlossenes Auge und die zweiten Mittel ein geschlitztes Auge umfassen, und dass die Mehrzahl der Seilabschnitte aus zwei Seilabschnitten eines durchgehenden Seiles besteht, welches durchgehende Seil durch den Schlitz in das geschlitzte Auge einführbar ist und in dem geschlitzten Auge geführt wird. Diese Ausführungsform ist besonders geeignet, wenn ein Seil am Haltepunkt umgelenkt oder geführt werden soll, ohne dass das Seil unterbrochen oder anderweitig für die Umlenkung bearbeitet werden muss.

Im einfachsten Fall sind das geschlossene Auge und das geschlitzte Auge durch einen massiven Verbindungssteg miteinander verbunden, und ist die aus den Augen und dem Verbindungssteg bestehende Vorrichtung einstückig ausgebildet. Durch die starre Orientierung der beiden Augen zueinander ist jedoch der Einsatzbereich eingeschränkt. Eine grössere Flexibilität wird erreicht, wenn gemäss einer Weiterbildung der Ausführungsform das geschlossene Auge und das geschlitzte Auge jeweils als Augenschraube ausgebildet sind, und die beiden Augenschrauben durch eine Gewindehülse miteinander lösbar und verstellbar verbunden sind. Durch die Gewindehülse lässt sich nicht nur die Orientierung der Augen zueinander verändern (zwischen parallel und senkrecht zueinander), sondern auch der Abstand der Augen.

Eine zweite bevorzugte Ausführungsform der Erfindung ist dadurch gekennzeichnet, dass die ersten Mittel ein Gewinde-Sackloch und die zweiten Mittel eine mit einer Mehrzahl von Durchgangslöchern versehene Platte umfassen, dass das Gewinde-Sackloch in der Ebene der Platte liegend angeordnet ist, dass die Platte halbkreisförmig ausgebildet ist, dass das Gewinde-Sackloch ungefähr im Kreismittelpunkt der Platte angeordnet und von der dem Halbkreis gegenüberliegenden Seite zugänglich ist, und dass die Durchgangslöcher auf dem Halbkreis um den Kreismittelpunkt herum verteilt angeordnet sind.

Wird diese Ausführungsform mit dem Gewinde-Sackloch direkt auf das freie Ende des Haltebolzens 74 in Fig. 10 aufgeschraubt, steht die Platte senkrecht zur Wand und die Seilabschnitte können vom Haltepunkt aus in verschiedene Raumrichtungen abgehen, die von der Wand wegführen. Wird dagegen in das Gewinde-Sackloch eine Augenschraube eingeschraubt und die Vorrichtung dann mittels der Augenschraube am Haltebolzen befestigt, liegt die Platte parallel zur Wand und die Seilabschnitte können vom Haltepunkt aus in verschiedene Raumrichtungen abgehen, die parallel zur Wand verlaufen. Bei genügend dicker Platte kann das Gewinde-Sackloch direkt in die Platte eingebracht werden. Ist die Platte dagegen zu dünn, wird das Gewinde-Sackloch vorzugsweise in einem Zylinderstück untergebracht, welches mit der Platte verschweisst ist.

Eine weitere bevorzugte Ausführungsform zeichnet sich dadurch aus, dass die ersten Mittel eine mit einem zentralen senkrechten Gewindeloch oder einer zentralen Durchgangsbohrung versehene Scheibe umfassen, und dass die zweiten Mittel Gewinde-Sacklöcher umfassen, welche in der Scheibenebene in radialer Richtung bezüglich des zentralen Gewindeloches bzw. der zentralen Durchgangsbohrung angeordnet sind. In dieser Konfiguration lassen sich besonders viele Seilabschnitte an einem gemeinsamen Haltepunkt verankern, für die der volle Winkelbereich von 360° zur Verfügung steht. In einer ersten Weiterbildung dieser Ausführungsform ist die Scheibe massiv und kreisrund ausgebildet, und sind die Gewinde-Sacklöcher in die Scheibe selbst eingelassen. Vorzugsweise sind insgesamt 8 Gewinde-Sacklöcher vorgesehen, die untereinander jeweils einen Winkelabstand von 45° aufweisen. Hierdurch wird eine hohe Flexibilität mit Seilabgängen in alle wesentlichen Raumrichtungen bei gleichzeitig sehr kompaktem Aufbau erreicht.

In einer zweiten Weiterbildung der Ausführungsform ist die Scheibe kreisrund ausgebildet, ist in der Scheibe eine um das zentrale Gewindeloch bzw. die zentrale Durchgangsbohrung umlaufende, nach aussen offene Kugelrinne ausgebildet, in welcher Kugeln eines geeigneten Durchmessers umlaufen können, ohne die Kugelrinne in radialer Richtung verlassen zu können, und sind die Gewinde-Sacklöcher radial in den Kugeln angeordnet. Die Seilabschnitte werden in geeigneter Weise mit den Kugeln verbunden, die in der Kugelrinne in hohem Masse beweglich sind. Hierdurch können Seilabgänge vom Haltepunkt in die unterschiedlichsten Raumrichtungen realisiert werden, ohne das der Anwender auf bestimmte Raumrichtungen festgelegt ist.

Eine weitere bevorzugte Ausführungsform der Erfindung zeichnet sich dadurch aus, dass die ersten Mittel ein mit einer Bohrung versehenes Mittelstück und die zweiten Mittel zwei in einer Achse quer zur Bohrung auf gegenüberliegenden Seiten des Mittelstücks anschliessende Gewindebolzen umfassen, und dass zur Befestigung der Seilabschnitte an den Gewindebolzen vorzugsweise achtförmige, mit zwei Durchgangslöchern versehene Lamellen vorgesehen sind, welche einzeln oder zu mehreren jeweils mit einem der Durchgangslöcher auf einen der Gewindebolzen aufgesteckt werden können, und mit dem anderen Durchgangsloch der Befestigung eines Seilabschnittes dienen. Hier bei kann durch Wahl der Anzahl der Lamellen die Zahl der Seilabgänge frei gewählt und an die Erfordernisse leicht angepasst werden.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in der Draufsicht ein erstes bevorzugtes Ausführungsbeispiel für eine Befestigungsvorrichtung nach der Erfindung in einstückiger Form mit einem geschlossenen und einem geschlitzten Auge zur Umlenkung eines durchgehenden Seiles;
- Fig. 2: ein zu Fig. 1 vergleichbares Ausführungsbeispiel mit einer geschlossenen und einer geschlitzten Augenschraube, die über eine Gewindehülse lösbar und verstellbar miteinander verbunden sind;
- Fig. 3: in der Draufsicht (Fig. 3A) und in der Seitenansicht (Fig. 1B) ein weiteres bevorzugtes Ausführungsbeispiel einer Vorrichtung nach der Erfindung in Form einer gelochten Platte (eines Gabelhalters) zur gemeinsamen Befestigung mehrerer in verschiedene Raumrichtungen abgehender Seilabschnitte an einem Haltepunkt;
- Fig. 4: das Ausführungsbeispiel aus Fig. 3 in einer anderen Anwendung mit einer zusätzlichen Augenschraube, die eine Ausrichtung des Gabelhalters parallel zur Wand ermöglicht;
- Fig. 5: in der Draufsicht (Fig. 5A) und in der Seitenansicht (Fig. 5B) ein anderes bevorzugtes Ausführungsbeispiel der erfindungsgemässen Vorrichtung in Form einer Radialscheibe mit radial und sternförmig um ein zentrales Gewindeloch angeordnete Gewinde-Sacklöchern;
- Fig. 6: im Querschnitt (Fig. 6A) und in der Draufsicht (Fig. 6B) ein weiteres bevorzugtes Ausführungsbeispiel einer Befestigungsvorrichtung nach der Erfindung in Form eines Radial-Kugelhalters mit in einer Kugelrinne umlaufenden Kugeln zur Befestigung der Seilabschnitte;
- Fig. 7-9: ein anderes bevorzugtes Ausführungsbeispiel für eine erfindungsgemässe Vorrichtung in Form eines Fächerhalters mit dem Grundelement des Halters in zwei verschiedenen Seitenansichten (Fig. 7A,B), und dem montierten Fächerhalter in der Draufsicht (Fig. 9) mit mehreren Lamellen gemäss Fig. 8 zur Befestigung von Seilabschnitte; und
- Fig. 10: in der teilweise geschnittenen Seitenansicht einen Wandhalter zur Befestigung der erfindungsgemässen Vorrichtungen gemäss der früheren Europäischen Patentanmeldung Nr. 95810350.9.

### WEGE ZUR AUSFÜHRUNG DER ERFINDUNG

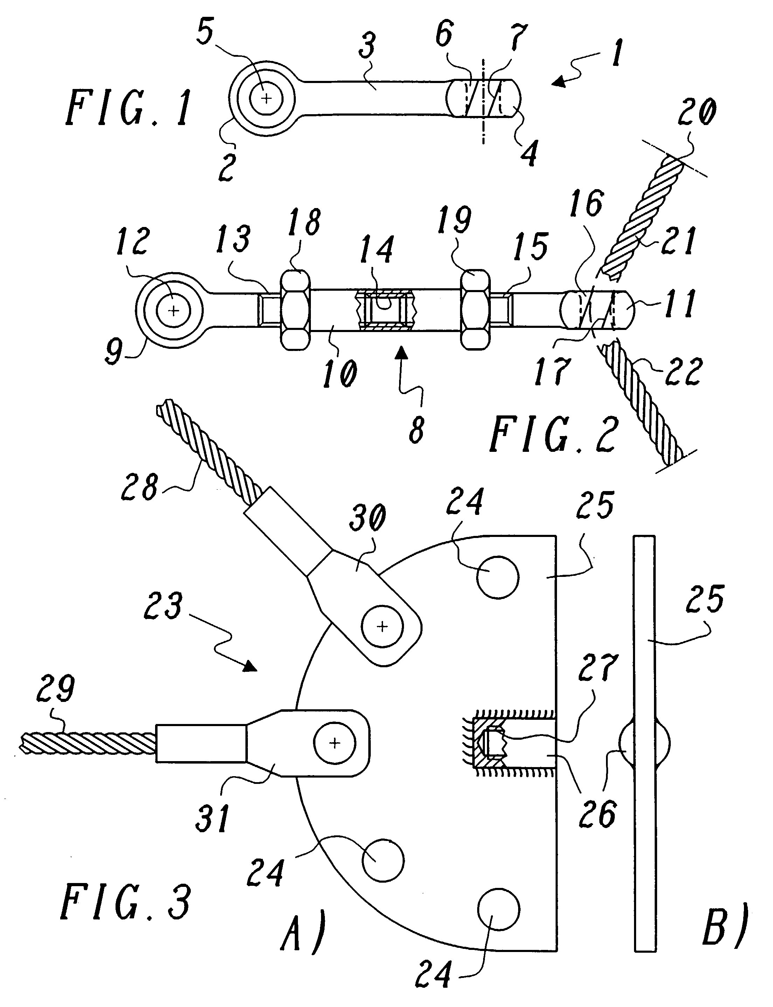

In Fig. 1 ist in der Draufsicht ein erstes bevorzugtes Ausführungsbeispiel für eine Führungs- bzw. Befestigungsvorrichtung nach der Erfindung wiedergegeben. Die Vorrichtung 1, die für die Führung bzw. Umlenkung eines durchgehenden Seiles (siehe Seil 20 in Fig. 2) vorgesehen ist, ist einstückig ausgebildet. Sie umfasst ein geschlossenes Auge 2 mit einer Bohrung 5 und ein geschlitztes Auge 4 mit einer Bohrung 6. Die beiden Augen 2 und 4 sind durch einen Verbindungssteg 3 fest verbunden. Die beiden Augen 2 und 4 sind mit den Mittelachsen ihrer Bohrungen vorzugsweise senkrecht zueinander angeordnet, können aber auch parallel oder in einem anderen Winkel zueinander angeordnet sein.

Die Vorrichtung 1 wird in der Anwendung mit dem Auge 2 über das freie Ende des Haltebolzens 74 des Wandhalters 73 gemäss Fig. 10 geschoben und verschraubt. Das umzulenkende Seil wird - wie dies am vergleichbaren Beispiel in Fig. 2 zu sehen ist - nicht in das Auge 4 eingefädelt, sondern durch einen Schlitz 7 im Auge 4 seitlich in die Bohrung 6 eingeführt und dort gehalten. Um ein unbeabsichtigtes Herausrutschen des Seiles aus dem geschlitzten Auge 4 zu verhindern bzw. zu erschweren, ist der Schlitz gegenüber der Mittelachse der Bohrung 6 um einen Winkel, z.B. 30°, geneigt. Die umlaufenden Kanten der Bohrung 6 sind vorzugsweise abgerundet, um Kerbwirkungen auf das geführte Seil zu vermeiden. Die Breite des Schlitzes 7 ist der Dicke des zu führenden Seiles angepasst.

Bei einem Seildurchmesser von z.B. 5 mm beträgt die Schlitzbreite vorzugsweise 5,2 mm. Grundsätzlich ist es denkbar, anstelle des geschlitzten Auges 4 auch ein ungeschlitztes Auge zu verwenden.

Die Vorrichtung 1 aus Fig. 1 ist besonders einfach aufgebaut, führt jedoch zu Einschränkungen in der Anwendung, weil die Orientierung und der Abstand der beiden Augen 2 und 4 bzw. Bohrungen 5 und 6 zueinander fest vorgegeben sind. Um in dieser Hinsicht eine grössere Flexibilität zu erzielen, wird eine Vorrichtung 8 gemäss dem Ausführungsbeispiel aus Fig. 2 vorgeschlagen. Anstelle fest verbundener Augen sind in diesem Ausführungsbeispiel zwei Augenschrauben 9 und 11 vorgesehen, die durch eine Gewindehülse 10 miteinander lösbar und verstellbar verbunden werden können. Die geschlossene Augenschraube 9 wird mit ihren Aussengewinde 13 soweit wie für den Anwendungsfall erforderlich in das Innengewinde 14 der Gewindehülse 10 eingeschraubt und ggf. mit einer Kontermutter 18 gekontert. Die geschlitzte Augenschraube 11 wird mit ihren Aussengewinde 15 in entsprechender Weise auf der andern Seite in die Gewindehülse 10 eingeschraubt und ebenfalls mit einer Kontermutter 19 gekontert. Es versteht sich von selbst, dass aufgrund der Schraubverbindung bei diesem Ausführungsbeispiel sowohl der Abstand der beiden Bohrungen 12 und 16 der Augenschrauben 9 bzw. 11 als auch der Winkel, den ihre Mittelachsen miteinander einschliessen in weiten Grenzen eingestellt werden kann. Der Schlitz 17 in der geschlitzten Augenschraube 17 hat dieselben Abmessungen und Aufgaben wie der Schlitz 7 in Fig. 1. Die beiden Seilabschnitte 21 und 22, die in diesem Fall geführt werden, sind Teil eines durchgehenden Seiles 20, welches durch den Schlitz 17 auf einfache Weise in die Augenschraube 11 eingehängt werden kann. In der in Fig. 1 und 2 gezeigten Orientierung der Augen bzw. Augenschrauben verläuft das geführte Seil vorzugsweise parallel zur Wand (80 in Fig. 10).

Ein weiteres bevorzugtes Ausführungsbeispiel einer Vorrichtung nach der Erfindung, welches nicht für die Umlenkung eines durchgehenden Seiles, sondern für die Befestigung separater Seilabschnitte an einem Wandhalter bzw. Haltepunkt vorgesehen ist, ist in Fig. 3 in der Draufsicht (A) und in der Seitenansicht (B) wiedergegeben. Die Vorrichtung 23 besteht aus einer in etwa halbkreisförmigen ebenen Platte 25 mit einem Aussendurchmesser von z.B. 100 mm, in deren Zentrum (ungefähr im Kreismittelpunkt) ein Zylinderstück 26 mit einem Gewinde-Sackloch 27 eingeschweisst ist. Die Achse des Gewinde-Sacklochs 27 liegt in der Mittelebene der Platte 25 und ist so orientiert, dass sie von der dem Halbkreis gegenüberliegenden Seite zugänglich ist.

Auf einem Halbkreis um den Kreismittelpunkt herum sind in der Platte 25 fünf Durchgangslöcher 24 in Winkelabständen von 45° angeordnet. An den Durchgangslöchern 24 können verschiedene Seilabschnitte 28, 29 beispielsweise mittels entsprechender Gabeln 30, 31 als Endstücke angeschraubt oder mittels durchgesteckter Bolzen verschwenkbar angelenkt werden. Durch die Anordnung der Durchgangslöcher 24 sind Abgänge der Seilabschnitte 28, 29 in verschiedene Raumrichtungen möglich. Es versteht sich von selbst, dass auch andere Anzahlen und Verteilungen der Durchgangslöcher 24 denkbar sind, und die Platte 25 eine andere als halbkreisförmige Gestalt aufweisen kann. Die Dicke der Platte beträgt, wenn sie rostfreiem Edelstahl Nr. 1.4301 hergestellt ist, beispielsweise 5 mm.

Die Platte 25 wird in der Anwendung mit dem Gewinde-Sackloch 37 auf das freie Ende des als Gewindestange ausgebildeten Haltebolzens 74 in Fig. 10 geschraubt, so dass die Platte 25 senkrecht zur Wand 80 steht. Da der Haltebolzen 74 in Fig. 10 vorzugsweise ein M8-Gewinde trägt, ist es bei der Plattendicke von 5 mm notwendig, das entsprechende M8-Gewinde-Sackloch 27 in dem zusätzlich an der Platte 25 angebrachten Zylinderteil 26 unterzubringen. Wird die Dicke der Platte 25 wesentlich grösser gewählt, kann das Gewinde-Sackloch 27 aber auch direkt in der Platte 25 selbst untergebracht werden.

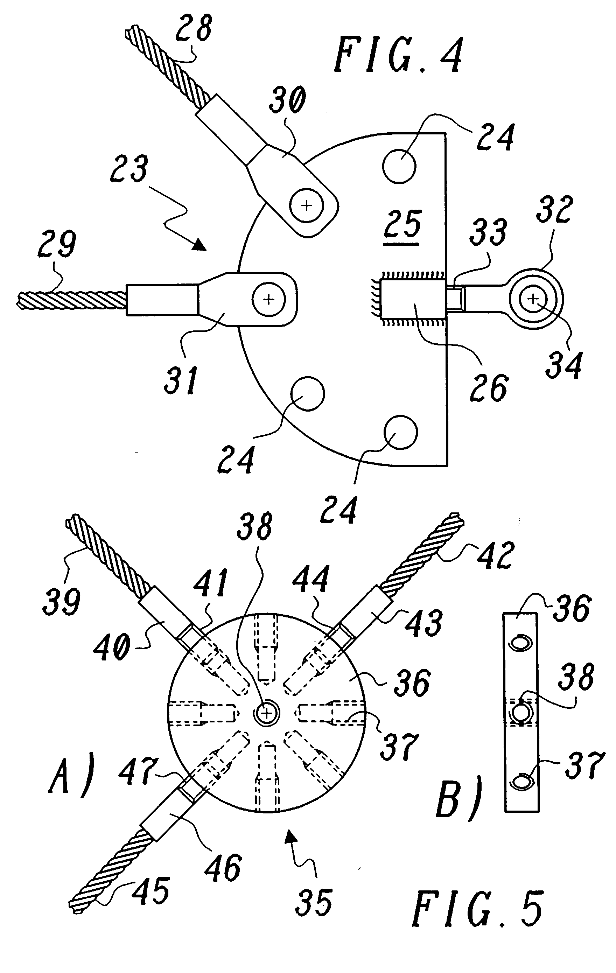

Durch das direkte Aufschrauben der Platte 25 auf den Haltebolzen 74 lassen sich überwiegend Seilabschnitte am Wandhalter 73 befestigen, die von der Wand 80 weg in den freien Raum hinausgehen. Da es jedoch häufig vorkommt, dass die Seilabschnitte parallel zur Wand verlaufen sollen, wäre es günstig, die Platte 25 so auszugestalten, dass sie parallel zur Wand orientiert am Wandhalter 73 montiert werden kann. Eine mögliche Lösung bestünde darin, im Zentrum der Platte 25 ein weiteres Durchgangsloch oder Gewindeloch für die Montage auf dem Haltebolzen 74 vorzusehen. Eine solche Lösung hätte aber die nachteilige Folge, dass für unterschiedliche Anwendungsfälle unterschiedlich gestaltete Platten als Gabelhalter hergestellt und ins Lager genommen werden müssten. Es wird daher im Rahmen der Erfindung gemäss Fig. 4 vorgeschlagen, für den beschriebenen Anwendungsfall dieselbe Platte 25 mit dem plattenparallelen Gewinde-Sackloch 27 zu verwenden und eine Anpassung durch eine in das Gewinde-Sackloch eingeschraubte Augenschraube 32 herbeizuführen. Die Augenschraube 32 mit der Bohrung 34 und dem Aussengewinde 33 kann dabei vorteilhafterweise von derselben Art und Abmessung sein, wie die Augenschraube 9 aus Fig. 2, so dass sich in einem kompletten Programm von Befestigungsvorrichtungen nach der Erfindung die Anzahl der Einzelteile reduzieren lässt. Es versteht sich von selbst, dass auch in diesem Fall zum Kontern der Augenschraube 32 eine entsprechende, in der Fig. 4 nicht gezeigte Kontermutter einsetzen lässt.

Durch die spezielle Anordnung des Gewinde-Sacklochs bei der Platte in Fig. 3 bzw. 4 steht für die Befestigung der Seilabschnitte 28, 29 nur ein beschränkter Winkelbereich von weniger als 360° zur Verfügung. Um den vollen Winkelbereich von 360° in der Ebene parallel zur Wand 80 ausnutzen zu können, ist eine Vorrichtung gemäss dem Ausführungsbeispiel aus Fig. 5 vorgesehen. Die Vorrichtung 35, die in Fig. 5 in der Draufsicht (A) und in der Seitenansicht (B) gezeigt ist, besteht aus einer kreisrunden Scheibe 36, die vorzugsweise aus rostfreiem Edelstahl Nr. 1.4305 hergestellt ist und bei einer Dicke von z.B. 10 mm einen Aussendurchmesser von z.B. 60 mm aufweist. Im Zentrum der Scheibe 36 ist ein senkrechtes Gewindeloch 38 (M8) angeordnet, mit dem die Scheibe 36 auf das freie Ende des Haltebolzens 74 aus Fig. 10 aufgeschraubt werden kann.

Für die Befestigung der Seilabschnitte 39, 42, 45 sind in der Scheibenebene in radialer Richtung bezüglich des zentralen Gewindeloches 38 sternförmig 8 Gewinde-Sacklöcher 37 in die Scheibe 36 eingelassen, in welche beispielsweise mit einem Aussengewinde 41, 44, 47 versehene Presshülsen 40, 43, 46 auf den Enden der Seilabschnitte 39, 42, 45 eingeschraubt werden können. Die Gewinde-Sacklöcher 37 haben untereinander einen Winkelabstand von je 45°, so dass mit der Vorrichtung 35 alle wesentlichen Richtungen für die abgehenden Seilabschnitt zur Verfügung stehen. Es ist jedoch durchaus denkbar, auch kleinere Winkelabstände vorzusehen.

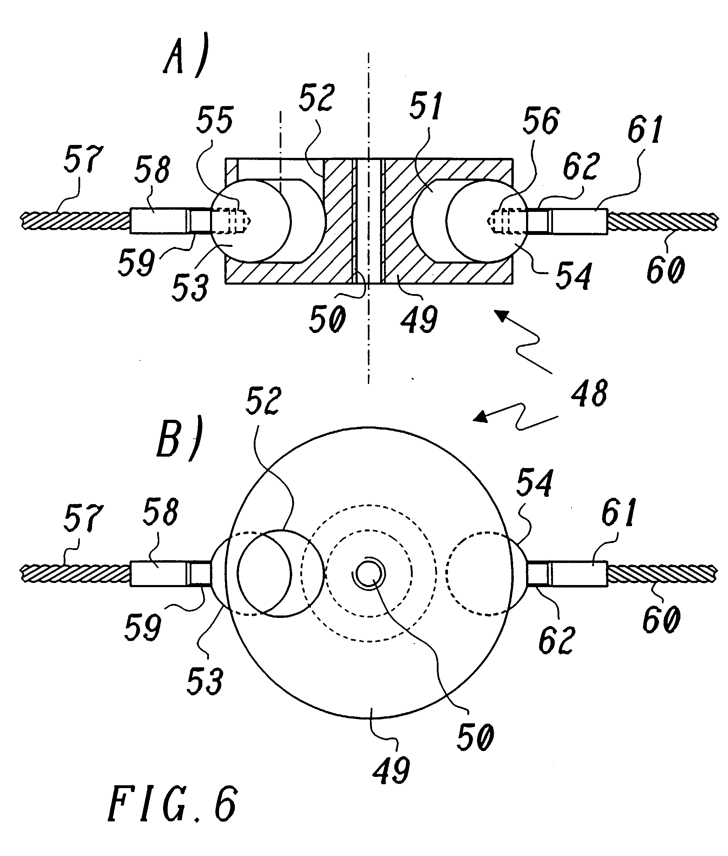

Die Vorrichtung 35 nach Fig. 5 ist zwar sehr einfach aufgebaut, hat jedoch für manche Anwendungsfälle den Nachteil, dass die Richtungen für die zu befestigenden Seilabschnitte fest vorgegeben und auf die Ebene parallel zur Wand 80 beschränkt sind. Um hier eine grössere Flexibilität zu erreichen, wird im Rahmen der Erfindung weiterhin eine Vorrichtung 48 gemäss Fig. 6 vorgeschlagen, die in weitem Rahmen eine individuelle Ausrichtung der Seilabschnitte am Haltepunkt zulässt. Die Vorrichtung 48, die in Fig. 6 im Schnitt (A) und in der Draufsicht (B) gezeigt ist, umfasst ebenfalls eine kreisrunde Scheibe 49 mit einem zentralen senkrechten Gewindeloch 50 für die Befestigung auf dem freien Ende des Haltebolzens 74. Auch hier sind in der Scheibenebene Gewinde-Sacklöcher 55, 56 vorgesehen, in welche z.B. mit einem Aussengewinde 59, 62 versehene Presshülsen 58, 62 von zu befestigenden Seilabschnitten 57, 60 eingeschraubt werden können. Die Gewinde-Sacklöcher 55, 56 sind jedoch in diesem Fall nicht fest in die Scheibe 49 eingelassen, sondern in Kugeln 53 bzw. 54. Die Kugeln 53, 54 können in einer in die Scheibe 49 eingelassenen Kugelrinne 51 um das zentrale Gewindeloch 50 umlaufen. Die Kugelrinne 51 ist nach aussen offen ausgebildet, jedoch in ihrer Höhe nach aussen zu soweit verkleinert, dass die Gewinde-Sacklöcher 55, 56 in den Kugeln zwar von aussen zugänglich sind, die Kugeln selbst aber die Kugelrinne 51 in radialer Richtung nicht verlassen können. Die Höhenreduktion erfolgt dabei vorzugsweise in Anpassung an den Kugelradius.

Zum Einführen der Kugeln 53, 54 in die Kugelrinne 51 bzw. zum Herausnehmen der Kugeln aus der Rinne ist parallel zum zentralen Gewindeloch 50 eine Einfüllbohrung 52 von einer der Scheibenflächen zur Kugelrinne 51 vorgesehen. Die Kugeln werden in frei wählbarer Anzahl durch die Einfüllbohrung 51 in die Kugelrinne 51 eingefüllt und anschliessend mit den Seilabschnitten 57 bzw. 60 verschraubt. Zur Konterung können auch hier, ebenso wie in Fig. 5, nicht dargestellte Kontermuttern eingesetzt werden. Die mit den Kugeln 53, 54 verschraubten Seilabschnitte 57, 60 können nicht nur in der Scheibenebene, d.h., parallel zur Wand 80 in beliebige Richtungen vom Haltepunkt abgehen, sondern können durch die Ausgestaltung der Kugelrinne 51 auch aus der Scheibenebene heraus in einem relativ grossen Winkelbereich geneigt werden, so dass diese Ausführungsform der erfindungsgemässen Vorrichtung zwar komplizierter im Aufbau, aber ausserordentlich flexibel in der Anwendung ist. In einer bewährten Form hat die Vorrichtung 48 eine Scheibendicke von 30 mm, einen Scheibendurchmesser von 70 mm, eine maximale Höhe der Kugelrinne 51 von etwas mehr als 20 mm für Kugeln mit einem Durchmesser von 20 mm. Bei Ausführung der Teile aus rostfreiem Edelstahl Nr. 1.4305 und der in Fig. 6 dargestellten Ausformung der Kugelrinne 51 lässt sich für die in der Rinne gelagerten Kugeln eine maximale Zugkraft von 5 kN erreichen. Es sei an dieser Stelle ausdrücklich darauf hingewiesen, dass sowohl bei der Scheibe 49 aus Fig. 6 als auch bei der Scheibe 36 aus Fig. anstelle der Gewindelöcher 50 bzw. 38 einfache Durchgangsbohrungen vorgesehen werden können, wodurch die Montage einfacher und schneller wird.

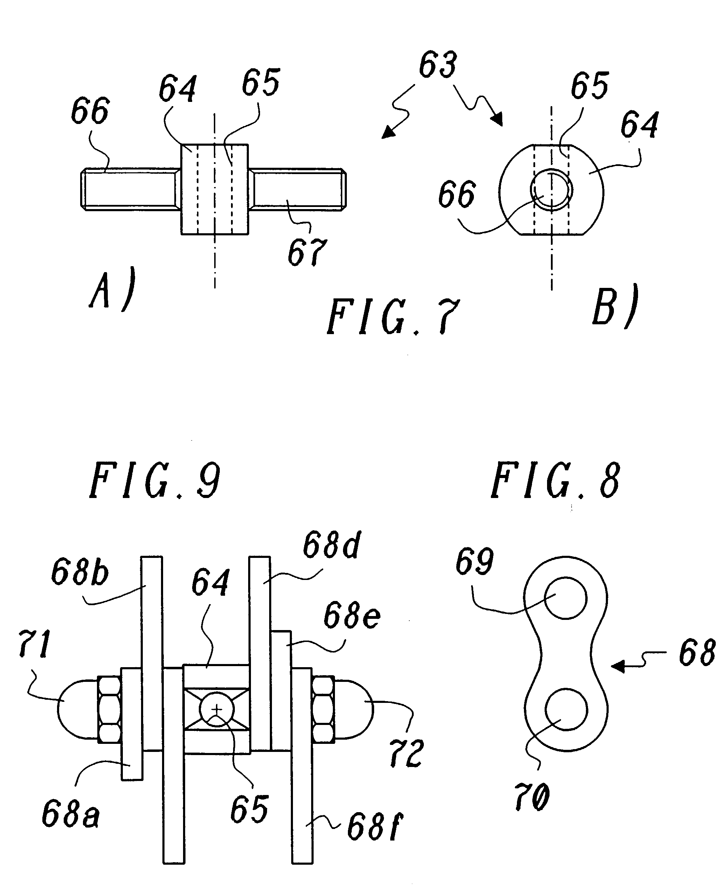

Ein letztes Ausführungsbeispiel für die erfindungsgemässe Vorrichtung ist in den Fig. 7-9 wiedergegeben. Die Vorrichtung 63 umfasst ein mit einer Bohrung 65 versehenes, zylindrisches Mittelstück 64, an das in einer Achse quer zur Bohrung 65 auf gegenüberliegenden Seiten des Mittelstücks 64 anschliessende zwei Gewindebolzen 66, 67 (z.B. M10) anschliessen bzw. einstückig angeformt sind. Das Mittelstück 64 kann mit der Bohrung 65 auf das freie Ende des Haltebolzens 74 gesteckt und dort verschraubt werden. Zur Befestigung der Seilabschnitte an den Gewindebolzen 66, 67 sind vorzugsweise achtförmige, jeweils mit zwei Durchgangslöchern 69, 70 versehene Lamellen (68 in Fig. 8; 68a-f in Fig. 9) vorgesehen, welche einzeln oder zu mehreren jeweils mit einem der Durchgangslöcher 69 bzw. 70 auf einen der Gewindebolzen 66 bzw. 67 aufgesteckt werden können, und mit dem anderen Durchgangsloch 70 bzw. 69 der Befestigung eines Seilabschnittes dienen (Fig. 9). Für die Befestigung der Seilabschnitte können beispielsweise Gabeln oder Gabelköpfe verwendet werden, wie sie bereits in Fig. 3 bzw. 4 mit den Bezugszeichen 30, 31 dargestellt sind. Zur Sicherung der Lamellen 68a-f auf den Gewindebolzen 66, 67 eignen sich vorzugsweise Hutmuttern 71, 72. Die Teile 64 und 68 werden vorzugsweise aus rostfreiem Edelstahl Nr. 1.4305 hergestellt. Bei den Lamellen 68 bzw. 68a-f hat sich eine Dicke von 5 mm und ein Abstand der Durchgangslöcher von 27 mm bewährt. Mit der Vorrichtung 63 lassen sich - ähnlich wie mit der Vorrichtung 23 in Fig. 3 - Raumrichtungen für die Seilabschnitte vorgeben, die von der Wand 80 wegweisen. Vorteilhaft ist hier, dass sich die Richtungen noch flexibler auswählen lassen, als bei der Platte gemäss Fig. 3.

Insgesamt ergibt sich mit der Erfindung ein Befestigungs- bzw. Führungssystem für Seilabschnitte, vorzugsweise von rostfreien Drahtseilen aus Edelstahl als Rank- und Begrünungshilfe an Gebäudefassaden, das durch vielfältige Kombinierbarkeit, einfachen und robusten Aufbau, flexiblen Einsatz und ein ästhetisch ansprechendes Aussehen besticht.

### BEZEICHNUNGSLISTE

- 1,8,23: Befestigungsvorrichtung
- 2: Auge (geschlossen)
- 3: Verbindungssteg
- 4: Auge (geschlitzt)
- 5,6: Bohrung
- 7: Schlitz
- 9: Augenschraube (geschlossen)
- 10: Gewindehülse
- 11: Augenschraube (geschlitzt)
- 12,16: Durchgangsloch
- 13,15: Aussengewinde
- 14: Innengewinde
- 17: Schlitz
- 18,19: Kontermutter
- 20: Seil (Drahtseil)
- 21,22: Seilabschnitt
- 24: Durchgangsloch
- 25: Platte
- 26: Zylinderstück
- 27: Gewinde-Sackloch
- 28,29: Seilabschnitt
- 30,31: Gabel
- 32: Augenschraube
- 33: Aussengewinde
- 34: Bohrung
- 35,48: Befestigungsvorrichtung
- 36: Scheibe
- 37: Gewinde-Sackloch
- 38: Gewindeloch
- 39,42,45: Seilabschnitt
- 40,43,46: Presshülse
- 41,44,47: Aussengewinde
- 49: Scheibe
- 50: Gewindeloch
- 51: Kugelrinne (umlaufend)
- 52: Einfüllbohrung
- 53,54: Kugel
- 55,56: Gewinde-Sackloch
- 57,60: Seilabschnitt
- 58,61: Presshülse
- 59,62: Aussengewinde
- 63: Befestigungsvorrichtung
- 64: Mittelstück (zylindrisch)
- 65: Bohrung
- 66,67: Gewindebolzen
- 68, 68a-f: Lamelle
- 69,70: Durchgangsloch
- 71,72: Hutmutter
- 73: Wandhalter
- 74: Haltebolzen
- 75: Stützplatte
- 76a,b: Abstützstange
- 77: Abdeckrohr
- 78: Grundplatte
- 79: Mutter
- 80: Wand
- 81: Zwischenstück (thermisch isolierend)
- 82: Gewindestange
- 83: Gewindebohrung
- 84: Bohrung

## Patentansprüche

1. Vorrichtung (1, 8, 23, 35, 48, 63) für die Führung bzw. Befestigung einer Mehrzahl von in verschiedene Raumrichtungen abgehenden Seilabschnitten (21, 22; 28, 29; 39, 42, 45; 57, 60) an einem Haltepunkt, insbesondere an einem aus einer Wand (80) herausragenden, in der Wand (80) befestigten Wandhalter (73) zum Aufbau von Rankhilfen an Gebäuden, dadurch gekennzeichnet, dass die Vorrichtung (1, 8, 23, 35, 48, 63) erste Mittel (2; 9; 26, 27, 32; 36, 38; 49, 50; 64, 65) zum Befestigen der Vorrichtung an dem Haltepunkt und zweite Mittel (4; 11; 24, 25; 37; 51, 53, 54, 55, 56; 66, 67, 68, 68a-f) zum gemeinsamen Führen bzw. Befestigen der Mehrzahl der Seilabschnitte (21, 22; 28, 29; 39, 42, 45; 57, 60) umfasst, welche zweiten Mittel (4; 11; 24, 25; 37; 51, 53, 54, 55, 56; 66, 67, 68, 68a-f) mit den ersten Mitteln (2; 9; 26, 27, 32; 36, 38; 49, 50; 64, 65) mechanisch verbunden sind.

2. Vorrichtung nach Anspruch 1, dadurch gekennzeichnet, dass die ersten Mittel ein geschlossenes Auge (2 bzw. 9) und die zweiten Mittel ein geschlitztes Auge (4 bzw. 11) umfassen, und dass die Mehrzahl der Seilabschnitte aus zwei Seilabschnitten (21, 22) eines durchgehenden Seiles (20) besteht, welches durchgehende Seil (20) durch den Schlitz (7 bzw. 17) in das geschlitzte Auge (4 bzw. 11) einführbar ist und in dem geschlitzten Auge geführt wird.

3. Vorrichtung nach Anspruch 2, dadurch gekennzeichnet, dass das geschlossene Auge (2) und das geschlitzte Auge (4) durch einen massiven Verbindungssteg (3) miteinander verbunden sind, und dass die aus den Augen (2, 4) und dem Verbindungssteg (3) bestehende Vorrichtung (1) einstückig ausgebildet ist.

4. Vorrichtung nach Anspruch 3, dadurch gekennzeichnet, dass die beiden Augen (2, 4) mit ihren Mittelachsen senkrecht zueinander orientiert sind.

5. Vorrichtung nach Anspruch 2, dadurch gekennzeichnet, dass das geschlossene Auge und das geschlitzte Auge jeweils als Augenschraube (9 bzw. 11) ausgebildet sind, und dass die beiden Augenschrauben (9, 11) durch eine Gewindehülse (10) miteinander lösbar und verstellbar verbunden sind.

6. Vorrichtung nach Anspruch 1, dadurch gekennzeichnet, dass die ersten Mittel ein Gewinde-Sackloch (27) und die zweiten Mittel eine mit einer Mehrzahl von Durchgangslöchern (24) versehene Platte (25) umfassen, und dass das Gewinde-Sackloch (27) in der Ebene der Platte (25) liegend angeordnet ist.

7. Vorrichtung nach Anspruch 6, dadurch gekennzeichnet, dass das Gewinde-Sackloch (27) in einem Zylinderstück (26) untergebracht ist, und dass das Zylinderstück (26) mit der Platte (25) verschweisst ist.

8. Vorrichtung nach einem der Ansprüche 6 und 7, dadurch gekennzeichnet, dass die Platte (25) halbkreisförmig ausgebildet ist, dass das Gewinde-Sackloch (27) ungefähr im Kreismittelpunkt der Platte (25) angeordnet und von der dem Halbkreis gegenüberliegenden Seite zugänglich ist, und dass die Durchgangslöcher (24) auf dem Halbkreis um den Kreismittelpunkt herum verteilt angeordnet sind.

9. Vorrichtung nach Anspruch 1, dadurch gekennzeichnet, dass die ersten Mittel eine mit einem zentralen senkrechten Gewindeloch (38 bzw. 50) oder einer zentralen Durchgangsbohrung versehene Scheibe (36 bzw. 49) umfassen, und dass die zweiten Mittel Gewinde-Sacklöcher (37 bzw. 55, 56) umfassen, welche in der Scheibenebene in radialer Richtung bezüglich des zentralen Gewindeloches (38 bzw. 50) bzw. der zentralen Durchgangsbohrung angeordnet sind.

10. Vorrichtung nach Anspruch 9, dadurch gekennzeichnet, dass die Scheibe (38) massiv und kreisrund ausgebildet ist, und dass die Gewinde-Sacklöcher (37) in die Scheibe (38) selbst eingelassen sind.

11. Vorrichtung nach Anspruch 10, dadurch gekennzeichnet, dass insgesamt 8 Gewinde-Sacklöcher (37) vorgesehen sind, die untereinander jeweils einen Winkelabstand von 45° aufweisen.

12. Vorrichtung nach Anspruch 9, dadurch gekennzeichnet, dass die Scheibe (49) kreisrund ausgebildet ist, dass in der Scheibe (49) eine um das zentrale Gewindeloch (50) bzw. um die zentrale Gewindebohrung umlaufende, nach aussen offene Kugelrinne (51) ausgebildet ist, in welcher Kugeln (53, 54) eines geeigneten Durchmessers umlaufen können, ohne die Kugelrinne (51) in radialer Richtung verlassen zu können, und dass die Gewinde-Sacklöcher (55, 56) radial in den Kugeln (53, 54) angeordnet sind.

13. Vorrichtung nach Anspruch 12, dadurch gekennzeichnet, dass parallel zum zentralen Gewindeloch (50) bzw. zur zentralen Gewindebohrung eine Einfüllbohrung (52) von einer der Scheibenflächen zur Kugelrinne (51) vorgesehen ist, durch welche die Kugeln (53, 54) von aussen herausnehmbar in die Kugelrinne (51) eingebracht werden können.

14. Vorrichtung nach Anspruch 1, dadurch gekennzeichnet, dass die ersten Mittel ein mit einer Bohrung (65) versehenes Mittelstück (64) und die zweiten Mittel zwei in einer Achse quer zur Bohrung (65) auf gegenüberliegenden Seiten des Mittelstücks (64) anschliessende Gewindebolzen (66, 67) umfassen.

15. Vorrichtung nach Anspruch 14, dadurch gekennzeichnet, dass zur Befestigung der Seilabschnitte an den Gewindebolzen (66, 67) vorzugsweise achtförmige, mit zwei Durchgangslöchern (69, 70) versehene Lamellen (68; 68a-f) vorgesehen sind, welche einzeln oder zu mehreren jeweils mit einem der Durchgangslöcher (69 bzw. 70) auf einen der Gewindebolzen (66 bzw. 67) aufgesteckt werden können, und mit dem anderen Durchgangsloch (70 bzw. 69) der Befestigung eines Seilabschnittes dienen.
